# EUROPEAN PATENT APPLICATION

(11) **EP 2 551 476 A1**
(43) Date of publication of application: **30.01.2013**
(21) Application number: 11175468.5
(22) Date of filing: 26.07.2011
(51) Int. Cl.: F01K 17/04, F01K 23/10

(54) **Control of heat generation for carbon capture**

(71) Applicant: Alstom Technology Ltd, 5400 Baden (CH)
(72) Inventor: Carroni, Richard, 5443 Niederrohrdorf (CH); Agostinelli, Gian Luigi, 8048 Zürich (CH)
(74) Representative: Dreiss

(57) **Abstract**

For the sake of improving a power plant having a power generating system, a carbon capture system that obtains operational heat from a flue gas of said power generating system, and a supplementary heat source for selectively providing supplementary operational heat to said carbon capture system, the present disclosure teaches a control system comprising a controller configured and adapted to signal said supplementary heat source to provide said supplementary operational heat as a function of at least one of a load of said power generating system, a temperature of an operating fluid of said carbon capture system, a thermal inertia of said carbon capture system and a target time until operation. The present disclosure also teaches a control system comprising a controller configured and adapted to determine if an operational heat available from said flue gas is sufficient for sustained operation of said carbon capture system and to signal said supplementary heat source to provide said supplementary operational heat when said available operational heat is insufficient for sustained operation of said carbon capture system.

## Description

### BACKGROUND OF THE INVENTION

### FIELD OF THE DISCLOSURE

The present disclosure relates to a control system for a power plant, a method of operating a power plant, a method of modifying a power plant as well as a non-transitory computer-readable storage medium, in particular with respect to a power plant having a power generating system, a carbon capture system that obtains operational heat from a flue gas of the power generating system, and a supplementary heat source for selectively providing supplementary operational heat to the carbon capture system.

### DESCRIPTION OF THE RELATED ART

As a result of growing concern as regards the detrimental effects of carbon dioxide in the atmosphere, it is becoming increasingly more common to equip power plants with carbon capture systems capable of removing a large percentage of the carbon dioxide from the flue gases that result from combustion of the fuel.

It is an object of the present disclosure to improve upon this prior art.

### BRIEF SUMMARY OF THE DISCLOSURE

Generally speaking, the present disclosure provides means and techniques for achieving high-efficiency operation of a carbon capture system.

In accordance with a teaching of the present disclosure, this can be achieved, *inter alia,* by providing supplementary operational heat to the carbon capture system as a function of at least one of a load of said power generating system, a temperature of an operating fluid of said carbon capture system, a thermal inertia of said carbon capture system and a target time until operation.

In accordance with another teaching of the present disclosure, this can be achieved, *inter alia,* by determining if an operational heat available from a flue gas is sufficient for sustained operation of said carbon capture system and providing supplementary operational heat to the carbon capture system when the available operational heat is insufficient for sustained operation of the carbon capture system

In accordance with a first aspect, the present disclosure teaches a control system for a power plant having a power generating system and a carbon capture system. The power generating system may be configured to produce electrical energy via combustion of a fuel. The carbon capture system may be configured to remove a significant percentage, e.g. upwards of 85% when operating at maximal efficiency, of carbon dioxide from a fluid passing through the carbon capture system, e.g. a flue gas produced by the combustion of the fuel.

The power plant may be a single cycle power plant or a combined cycle power plant. In other words, the power generating system of the power plant may comprise one or more power generating cycles. The power plant may, for example, employ coal or gas as a fuel.

The power generating system may comprise, e.g. as a first power generating cycle, a turbine powered by expansion of a fluid heated by combustion of the fuel, e.g. a gas turbine. The power generating system may moreover comprise, e.g. as a second power generating cycle, a turbine powered by expansion of fluid, e.g. steam, produced/heated by flue gases resulting from combustion of fuel. In this respect, the power plant may comprise a heat recovery system, e.g. a heat recovery steam generator, for extracting heat from the flue gases to produce/heat the fluid.

The carbon capture system may employ an operational fluid that absorbs carbon dioxide at one temperature and releases the absorbed carbon dioxide at another temperature, e.g. an amine solvent. The carbon capture system may require operational heat to raise the operational fluid from the one temperature to the other temperature, or vice versa. The carbon capture system may obtain operational heat from a heat source inherent to the power generating system, e.g. from a flue gas of said power generating system. For example, the power plant may comprise a heat recovery system, e.g. a heat recovery steam generator, for extracting heat from the power generating system to heat a fluid, e.g. the operational fluid of the carbon capture system or an intermediate fluid used to transport operational heat to the operational fluid.

The power plant may comprise a supplementary heat source for selectively providing supplementary operational heat to said carbon capture system. The supplementary heat source may produce the supplementary operational heat electrically or by burning a fuel, e.g. a combustible gas. The supplementary heat source may heat the operational fluid directly, e.g. by heating a containment vessel containing the operational fluid, or indirectly, *i.e.* by heating an intermediate fluid that transfers heat to the operational fluid. The supplementary heat source may be provided in a duct that conducts a flue gas produced by the power generating system. The supplementary heat source may be provided in a heat recovery system of the power plant.

For example, the power plant can be a combined cycle power plant in which heat of a flue gas produced by combustion of a fuel that powers a first power generating cycle of the power generating system produces/heats steam for powering a second power generating cycle of the power generating system. The steam may also be used to raise the temperature of an amine solvent of the carbon capture system to raise the temperature of the amine solvent to a temperature at which the amine solvent releases carbon dioxide that the amine solvent has absorbed. The power plant may comprise a heat recovery steam generator for extracting heat from the flue gas, *i.e.* for producing/heating the steam. The heat recovery steam generator may comprise a supplementary firing system for selectively raising the temperature of the flue gas in a chamber of the heat recovery steam generator by combustion of a fuel in that chamber, the increase in flue gas temperature bringing about a corresponding increase in the production/heating of steam.

The supplementary heat source may comprise a heat source, e.g. a burner, as well as control components, e.g. valves, switches and corresponding circuitry, for regulating a flow of fuel or power to the heat source.

The control system may comprise a controller configured and adapted to signal the supplementary heat source to provide the supplementary operational heat. For example, the controller may output a control signal to the supplementary heat source indicative of a desired operational state of the supplementary heat source, e.g. an ON-state, an OFF-state or a partially ON state. For example, the control signal may be indicative of a desired duty cycle of the supplementary heat source. The control signal may indicate the desired duty cycle by switching in accordance with the desired duty cycle between a value representative of the ON-state and a value representative of the OFF-state. Similarly, the control signal may indicate the desired duty cycle by being representative of a percentage of a 100% duty cycle. The supplementary heat source may be configured and adapted to operate, *i.e.* to provide supplementary operational heat, as stipulated by the control signal output by the controller. The controller may be implemented in hardware and/or software.

The controller may be configured and adapted to signal the supplementary heat source to provide the supplementary operational heat as a function of at least one of a load of the power generating system, a temperature of an operating fluid of the carbon capture system, a thermal inertia of the carbon capture system and a target time until operation. As such, the controller may be configured to receive a load signal indicative of a load of the power generating system, e.g. the load of at least one power generating cycle from/via which the carbon capture system obtains operational heat. The load signal may express the respective load as a percentage of a maximal design load of the respective power generating cycle. The controller may furthermore be configured to receive data indicative of a thermal inertia of the carbon capture system, e.g. the thermal inertia of the operating fluid that effects carbon capture and the components of the carbon capture system thermally associated with the operating fluid. This data may be stored in the controller, e.g. in a memory. The controller may moreover be configured to receive a temperature signal indicative of a temperature of the operating fluid of the carbon capture system, e.g. a temperature of the operating fluid at a location in the carbon capture system where the operating fluid, in normal operation, reaches maximal temperature. The control system may comprise one or more thermometers for measuring a temperature directly or indirectly indicative of a temperature of the operating fluid of the carbon capture system and for providing a corresponding temperature signal to the controller. A thermometer may be positioned to measure a temperature of the operating fluid at a location in the carbon capture system where the operating fluid, in normal operation, reaches maximal temperature. Since the temperature of the operating fluid cannot exceed the temperature of an intermediate fluid used to transport operational heat to the operational fluid, a thermometer may measure a temperature of such an intermediate fluid. The controller may moreover be configured to receive a user input indicative of a target time until operation, e.g. a target time until efficient operation of the carbon capture system, *i.e.* indicative of a maximal amount of time that may elapse until the carbon capture system is operating at maximal efficiency or higher than a given percentage (e.g. 80 or 90%) of maximal efficiency.

Knowledge of a load of the power generating system can be of utility to the controller in estimating an amount of operational heat available to the carbon capture system from the power generating system. Knowledge of a thermal inertia of the carbon capture system can be of utility to the controller in estimating the amount of (supplementary) operational heat required to raise the operational fluid of the carbon capture system to an operating temperature in a given time. Knowledge of a temperature of an operating fluid of the carbon capture system can likewise be of utility to the controller in estimating an amount of (supplementary) operational heat required to raise the operational fluid of the carbon capture system to an operating temperature. Knowledge of the target time until operation informs the controller of a user's preference as regards system responsiveness. At locations where fuel for the supplementary heat source is expensive, for example, a power plant operator may be willing to accept sub-optimal scrubbing of carbon dioxide from the flue gas for the sake of saving costs, *i.e.* may be willing to accept a long span of time during which the carbon capture system might be operating at significantly sub-optimal efficient. At locations where governmental regulation stipulates a high degree of carbon dioxide scrubbing and customers are willing to pay a premium for reliable electricity grids, the power plant operator may wish to maintain the carbon capture system in a "stand-by" state even when the momentary load of the power generating system is low, *i.e.* may desire that the carbon capture system should be ready to operate at roughly optimal efficient at a moment's notice or at least within a relatively short time span.

The controller may be configured and adapted to estimate an amount of operational heat available to the carbon capture system from the power generating system and/or to estimate an amount of operational heat and/or supplementary operational heat required to raise the operational fluid of the carbon capture system to an operating temperature, in particular in a given time. A load of the power generating system, a temperature of an operating fluid of the carbon capture system and/or a thermal inertia of the carbon capture system may serve as a basis for such estimation. The controller may be configured and adapted to signal the supplementary heat source to provide supplementary operational heat in accordance with an estimation of the amount of operational heat available to the carbon capture system from the power generating system and/or in accordance with an estimation of the amount of operational heat and/or supplementary operational heat required to raise the operational fluid of the carbon capture system to an operating temperature.

The controller may be configured and adapted to receive operational data. This data may be stored in the controller, e.g. in a memory. The controller may be configured and adapted to signal the supplementary heat source to provide supplementary operational heat as a function of at least one of a load of the power generating system, a temperature of an operating fluid of the carbon capture system, a thermal inertia of the carbon capture system and a target time until operation and in accordance with the predetermined operational data. For example, the operational data may specify that the supplementary heat source should provide a maximal amount of supplementary operational heat if the load of the power generating system, e.g. the load of at least one power generating cycle from/via which the carbon capture system obtains operational heat, is below 30% of full load and the power generating system is not undergoing shut-down. Similarly, the operational data may specify that the supplementary heat source provide a correspondingly reduced percentage of maximal supplementary operational heat if the load of the power generating system, e.g. the load of at least one power generating cycle from/via which the carbon capture system obtains operational heat, is above 30% of full load, yet below a higher percentage of full load, e.g. 50% or 70%, and the power generating system is not undergoing shut-down. The operational data may specify power plant operating parameter values on the basis of which the controller can determine the percentage of full load to which supplementary operational heat is to be provided. In particular, the operational data may stipulate the aforementioned function of at least one of a load of the power generating system, a temperature of an operating fluid of the carbon capture system, a thermal inertia of the carbon capture system and a target time until operation. Moreover, the operational data may be indirectly indicative of predetermined operating parameters of the carbon capture system, e.g. of a thermal inertia of the carbon capture system and/or a target time until operation.

The controller may be configured and adapted to determine if an operational heat available from the power generating system, e.g. from a flue gas of the power generating system, is sufficient for sustained operation of the carbon capture system and to signal the supplementary heat source to provide supplementary operational heat when the available operational heat is insufficient for sustained operation of the carbon capture system. Such a situation can arise even when a load of the power generating system, the temperature of the operating fluid of the carbon capture system, the thermal inertia of the carbon capture system and the target time until operation give the impression that no supplementary operational heat is required to sustain operation of the carbon capture system. For example, when the power generating system is operating in a grid support mode, *i.e.* when the operational heat available from flue gases of a first power generating cycle is required to power a second power generating cycle. In such a case, the operational fluid in the carbon capture system may be at an operational temperature, and the first power generating cycle may generate more than enough operational heat to maintain the operational fluid of the carbon capture system that operational temperature. Nonetheless, for the sake of grid support, it may be desired to exploit the operational heat inherently produced in the first power generating cycle for powering the second power generating cycle rather than for heating the operational fluid of the carbon capture system.

Accordingly, the aforementioned operational data may specify power plant operating parameter values on the basis of which the controller can determine when to signal the supplementary heat source to provide supplementary operational heat, *i.e.* that specify when the operational heat available from the power generating system would not cover the needs of the carbon capture system.

As used in the present disclosure, the term "sustained operation" can be understood e.g. in the sense of maintaining an operating efficiency of the carbon capture system at maximal efficiency or higher than a given percentage (e.g. 80 or 90%) of maximal efficiency.

While the above disclosure has revolved primary around a control system, the above disclosure is equally applicable, *mutatis mutandis,* to a method of operating a power plant. Accordingly, in accordance with a second aspect, the present disclosure teaches a method of operating a power plant.

The method of operating a power plant may comprise signalling as described above, e.g. signalling a supplementary heat source to provide supplementary operational heat as a function of at least one of a load of a power generating system, a temperature of an operating fluid of a carbon capture system, a thermal inertia of the carbon capture system and a target time until operation.

Furthermore, the method of operating a power plant may comprise determining if an operational heat available a power generating system, e.g. from a flue gas of the power generating system, is sufficient for sustained operation of a carbon capture system as described above. The method may moreover comprise signalling as described above, e.g. signalling a supplementary heat source to provide supplementary operational heat when the available operational heat is insufficient for sustained operation of the carbon capture system.

The above disclosure is likewise equally applicable, *mutatis mutandis,* to a method of modifying a power plant. Accordingly, in accordance with a third aspect, the present disclosure teaches a method of modifying a power plant.

The method of modifying a power plant may comprise equipping the power plant with a controller as described above, e.g. a controller configured and adapted to signal a supplementary heat source to provide supplementary operational heat as a function of at least one of a load of a power generating system, a temperature of an operating fluid of a carbon capture system, a thermal inertia of the carbon capture system and a target time until operation.

Furthermore, the method of modifying a power plant may comprise equipping the power plant with a controller as described above, e.g. a controller configured and adapted to determine if an operational heat available from a flue gas of a power generating system is sufficient for sustained operation of a carbon capture system and to signal a supplementary heat source to provide supplementary operational heat when the available operational heat is insufficient for sustained operation of the carbon capture system.

The above methods allow an existing power plant to be modernized for achieving high-efficiency operation of a carbon capture system. The equipping may comprise installing a new controller in the power plant and/or modifying an existing controller to exhibit the described functionality. Latter may entail reprogramming the controller.

The aforementioned methods can be achieved using software. Accordingly, in accordance with a fourth aspect, the present disclosure teaches a non-transitory computer-readable storage medium having stored thereon a computer program product that performs any of the aforementioned methods when executed on a computer.

### BRIEF DESCRIPTION OF THE DRAWINGS

The novel features of the invention, as well as the invention itself, both as to its structure and its operation will be best understood from the accompanying figures, taken in conjunction with the accompanying description. The Figures show:
- Fig. 1: a schematic view of a power plant in accordance with the present disclosure, and
- Fig. 2: a schematic view of a supplementary firing in accordance with the present disclosure.

### DETAILED DESCRIPTION OF THE DRAWINGS

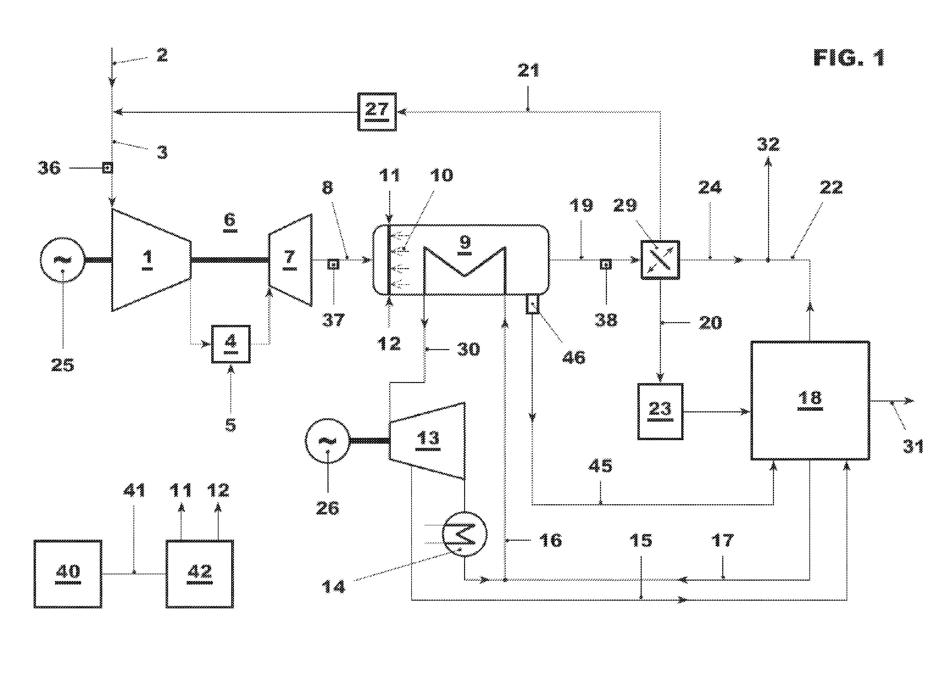

Figure 1 shows a power plant in accordance with the present disclosure, e.g. as described hereinabove.

In the embodiment illustrated in Fig. 1, the power plant is a combined cycle power plant including flue gas recirculation, a supplementary firing 10 and a carbon capture system 18.

A gas turbine 6, which drives a first generator 25, is supplied with compressor inlet gas 3, and fuel 5. The compressor inlet gas 3 is a mixture of ambient air 2, and a first partial flow 21 of the flue gases, which is recirculated via a flue gas recirculation line. The inlet gas is compressed in the compressor 1. The compressed gas is used for combustion of fuel 5 in a combustor 4, and pressurized hot gasses expand in a turbine 7. Its main outputs are electric power, and hot flue gasses 8.

The gas turbine's hot flue gasses 8 pass through a heat recovery steam generator (HRSG) 9, which generates steam 30 for a steam turbine 13. The supplementary firing 10 may operate as a source of supplementary operational heat to the carbon capture system 18 and may be provided in the heat recovery steam generator 9 or the flue gas duct from the gas turbine 6 to the heat recovery steam generator 9. The supplementary firing 10 is supplied with fuel gas 12 and ambient air/ oxygen 11.

In addition, a line 45 may also be provided between the heat recovery steam generator 9 and the carbon capture system 18, to directly supply steam generated in the heat recovery steam generator 9 into the carbon capture system 18. This permits pre-warming of the carbon capture system 18 for example at low or very low loads independently of the steam turbine mass flow rate. Preferably also a control valve 46 is provided, to regulate the flow through the line 45 between 0 and a maximum flow rate. The valve can be of an on/off type or of an adjustable type.

The power plant comprises a controller 40 as described above, the controller 40 generating and outputting one or more control signals 41 that are received by a supplementary firing control assembly 42 that, like the supplementary firing 10, may constitute a component of a supplementary heat source for providing supplementary operational heat to the carbon capture system 18. The supplementary firing control assembly 42 regulates, in response to the control signals 41, the amount of supplementary operational heat provided by the supplementary firing 10. In particular, the supplementary firing control assembly 42 regulates, in response to the control signals 41, a flow of fuel gas 12 and ambient air/ oxygen 11 to the supplementary firing 10, e.g. by means of corresponding valves.

The steam turbine 13 either is arranged in a single shaft configuration with the gas turbine 6 and the first generator 25, or is arranged in a multi shaft configuration to drive a second generator 26. Further, steam is extracted from the steam turbine 13 and supplied via a steam line 15 to a carbon capture system 18. The steam is returned to the steam cycle as a condensate via a return line 17 and is reintroduced into the steam cycle via feed water 16; in addition the steam from the turbine 13 is fed to a condenser 14 and is then returned to the steam cycle via feed water 16. The steam cycle is simplified and shown schematically without different steam pressure levels, feed water pumps, etc., as these are not subject of the invention.

A first partial flow 21 of the flue gases from the heat recovery steam generator 19 may be recirculated to the inlet of the compressor 1 of the gas turbine 6 where it is mixed with ambient air 2. The fist partial flow 21 is cooled in the recirculation flue gas cooler 27 before mixing with the ambient air 2.

A second partial flow 20 of the flue gases from the heat recovery steam generator 19 is directed to the carbon capture system 18 by a damper 29.

The carbon capture system 18 typically consists of a carbon dioxide absorption unit, in which carbon dioxide is removed from the flue gas by an absorbent, and a regeneration unit, in which the carbon dioxide is released from the absorbent. Depending on the temperature of the second partial flow 20 of the flue gases and the operating temperature range of the carbon dioxide absorption unit, a flue gas cooler 23 might also be required.

The carbon dioxide depleted flue gas 22 is released from the carbon capture system 18 to a stack 32. In case the carbon capture system 18 is not operating or operating at part load, or for the sake of increasing operational flexibility, the flue gases from the heat recovery steam generator can be bypassed or partly bypassed via the flue gas bypass 24.

In normal operation, the captured carbon dioxide 31 will be compressed in a carbon dioxide compressor and the compressed carbon dioxide will be forwarded for storage or further treatment.

Measurement devices to measure the oxygen concentration and/or carbon dioxide concentration are proposed in order to better control the residual oxygen concentration. For example, an inlet air carbon dioxide and/or oxygen measurement device 36 can be applied for better control of inlet gas composition for the gas turbine 6. For the control of the gas turbine's flue gas composition a gas turbine flue gas carbon dioxide and/or oxygen measurement device 37 can for example be applied. To control the gas composition of the heat recovery steam generator flue gas 19 a heat recovery steam generator flue gas carbon dioxide and/or oxygen measurement device 38 can for example be applied.

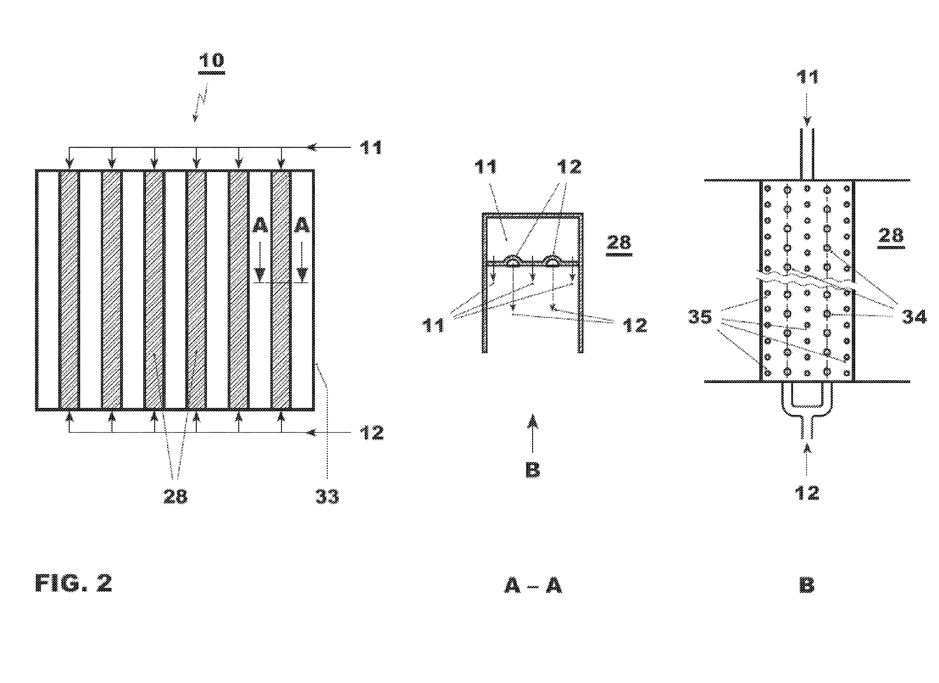

An example of a supplementary firing 10 for burning fuel gas 12 with ambient air at low excess air ratio and with oxygen/oxygen enriched air 11 in an heat recovery steam generator 9 is shown in Fig. 2. In the illustrated example, burner boxes 28 for supplementary firing are arranged traversal, spaced apart in arrays in a cross section of the heat recovery steam generator inlet 33 or inside the heat recovery steam generator. Gas turbine flue gas 8 passes past the burner boxes 28 through the passages between the boxes while the flame of the supplementary firing is stabilized in them. Additional ambient air or oxygen 11 as well as fuel gas 12 are supplied to the burner boxes and injected via the fuel gas injection orifices 34 and the oxidizer injection orifices 35. Typically, oxygen is not injected directly into burner boxes 28 but diluted with some carrier gas like ambient air or recirculated flue gas before it comes into contact with the fuel gas 12.

While various embodiments of the present invention have been disclosed and described in detail herein, it will be apparent to those skilled in the art that various changes may be made to the configuration, operation and form of the invention without departing from the spirit and scope thereof. In particular, it is noted that the respective features of the invention, even those disclosed solely in combination with other features of the invention, may be combined in any configuration excepting those readily apparent to the person skilled in the art as nonsensical. Likewise, use of the singular and plural is solely for the sake of illustration and is not to be interpreted as limiting.

### LIST OF REFERENCE SIGNS

- 1: Compressor
- 2: Ambient air
- 3: Compressor inlet gas
- 4: Combustor
- 5: Fuel gas for GT
- 6: Gas turbine (GT)
- 7: Turbine
- 8: Hot flue gas from gas turbine
- 9: HRSG (heat recovery steam generator)
- 10: Low excess air supplementary firing (SF)
- 11: Ambient air, and/or oxygen enriched air, and/or oxygen
- 12: Fuel gas for supplementary firing
- 13: Steam turbine
- 14: Condenser
- 15: Steam extraction for carbon capture
- 16: Feed water
- 17: Condensate return line
- 18: Carbon capture system
- 19: Flue gas from HRSG
- 20: Second partial flow (Flue gas carbon capture system)
- 21: First partial flow (Flue gas recirculation)
- 22: carbon dioxide depleted flue gas
- 23: Flue gas cooler
- 24: Flue gas bypass to stack
- 25: First generator
- 26: Second generator
- 27: Recirculation flue gas cooler
- 28: Burner box
- 29: Damper
- 30: Steam
- 31: Captured carbon dioxide
- 32: Stack
- 33: Cross section of HRSG inlet
- 34: Fuel gas injection orifices
- 35: Oxidizer injection orifices
- 36: Inlet air carbon dioxide and/or oxygen measurement devices
- 37: Gas turbine flue gas carbon dioxide and/or oxygen measurement devices
- 38: HRSG flue gas carbon dioxide and/or oxygen measurement devices
- 40: controller
- 41: signal
- 42: supplementary firing control assembly
- 45: line between 9 and 18
- 46: control valve
- CCPP: Combined cycle power plant

## Claims

1. A control system for a power plant having a power generating system (6), a carbon capture system (18) that obtains operational heat from a flue gas (8) of said power generating system, and a supplementary heat source (10, 42) for selectively providing supplementary operational heat to said carbon capture system, said control system comprising:
a controller (40) configured and adapted to signal said supplementary heat source to provide said supplementary operational heat as a function of at least one of a load of said power generating system, a temperature of an operating fluid of said carbon capture system, a thermal inertia of said carbon capture system and a target time until operation.

2. A control system for a power plant having a power generating system (6), a carbon capture system (18) that obtains operational heat from a flue gas (8) of said power generating system, and a supplementary heat source (10, 42) for selectively providing supplementary operational heat to said carbon capture system, said control system comprising:
a controller (40) configured and adapted to determine if an operational heat available from said flue gas is sufficient for sustained operation of said carbon capture system and to signal said supplementary heat source to provide said supplementary operational heat when said available operational heat is insufficient for sustained operation of said carbon capture system.

3. A power plant comprising:
a power generating system (6);
a carbon capture system (18) that obtains operational heat from a flue gas (8) of said power generating system;
a supplementary heat source (10, 42) for selectively providing supplementary operational heat to said carbon capture system; and
a control system in accordance with claim 1 or 2.

4. The power plant of claim 3, comprising:
a heat recovery steam generator (9), wherein
said supplementary heat source is provided in said heat recovery steam generator.

5. The power plant of claim 3 or 4 having a control system according to claim 1, wherein said operating fluid is an amine solvent.

6. A method of operating a power plant having a power generating system (6), a carbon capture system (18) that obtains operational heat from a flue gas (8) of said power generating system, and a supplementary heat source (10, 42) for selectively providing supplementary operational heat to said carbon capture system, said method comprising:
signalling said supplementary heat source to provide said supplementary operational heat as a function of at least one of a load of said power generating system, a temperature of an operating fluid of said carbon capture system, a thermal inertia of said carbon capture system and a target time until operation.

7. A method of operating a power plant having a power generating system (6), a carbon capture system (18) that obtains operational heat from a flue gas (8) of said power generating system, and a supplementary heat source (10, 42) for selectively providing supplementary operational heat to said carbon capture system, said method comprising:
determining if an operational heat available from said flue gas is sufficient for sustained operation of said carbon capture system; and
signalling said supplementary heat source to provide said supplementary operational heat when said available operational heat is insufficient for sustained operation of said carbon capture system.

8. A method of modifying a power plant having a power generating system (6), a carbon capture system (18) that obtains operational heat from a flue gas (8) of said power generating system, and a supplementary heat source (10, 42) for selectively providing supplementary operational heat to said carbon capture system, said method comprising:
equipping said power plant with a controller (40) configured and adapted to signal said supplementary heat source to provide said supplementary operational heat as a function of at least one of a load of said power generating system, a temperature of an operating fluid of said carbon capture system, a thermal inertia of said carbon capture system and a target time until operation.

9. A method of modifying a power plant having a power generating system (6), a carbon capture system (18) that obtains operational heat from a flue gas (8) of said power generating system, and a supplementary heat source (10, 42) for selectively providing supplementary operational heat to said carbon capture system, said method comprising:
equipping said power plant with a controller (40) configured and adapted to determine if an operational heat available from said flue gas is sufficient for sustained operation of said carbon capture system and to signal said supplementary heat source to provide said supplementary operational heat when said available operational heat is insufficient for sustained operation of said carbon capture system.

10. A non-transitory computer-readable storage medium having stored thereon a computer program product that performs the method according to any one of claims 6 to 9 when executed on a computer.
